# EUROPEAN PATENT SPECIFICATION

(11) **EP 3 614 046 B1**
(45) Date of publication and mention of the grant of the patent: **03.11.2021**
(21) Application number: 19181678.4
(22) Date of filing: 21.06.2019
(51) Int. Cl.: F21V 33/00, F21S 9/02, B65D 51/24, A01G 7/04, F21Y 115/10, F21V 23/04

(54) **BOTTLE PROVIDED WITH A RELEASABLE CAP**
FLASCHE MIT LÖSBAREM VERSCHLUSS
BOUTEILLE DOTÉE D'UN COUVERCLE AMOVIBLE

(30) Priority: 25.08.2018 WO PCT/IB2018/001067; 22.11.2018 NL 2022050
(43) Date of publication of application: 26.02.2020
(60) Divisional application: 21198159.2
(73) Proprietor: Aral Beheer B.V., 2681 NG Monster (NL)
(72) Inventor: Dijkhuizen, Corstiaan Arie, 2681 NG MONSTER (NL)
(74) Representative: Luten, Martin Haaije

(56) References cited:
- WO-A1-2014/196484
- CN-U- 206 596 415
- CN-U- 206 776 505
- CN-Y- 201 073 898
- JP-U- 3 214 572
- US-A1- 2010 182 771

## Description

The present invention relates to a bottle provided with a releasable cap which is arranged on a neck of the bottle and which closes the bottle. The invention further relates to a cap for a closable bottle.

For the purpose of closing a container, for instance a bottle or jar, for containing products use can be made of a cap or closure which closes the upper side of this container. Such a cap can for instance be embodied as screw cap, wherein the neck and cap are provided with co-acting screw thread, or a clamp top or cork, which is secured clampingly in the neck. Such a cap can be provided for this purpose with an inclining side surface to enable it to be received clampingly in a neck of a bottle.

Chinese utility model CN 201073898 Y discloses an illuminating bottle cap, which comprises an upper bottle cap, a lower bottle cap capable of being arranged in the upper bottle cap to engage the upper bottle cap, a battery and at least one light emitting diode fixed in the lower bottle cap, a switch on the bottle cap and capable of serially connecting the battery and light emitting diodes in the lower bottle cap.

Chinese utility model CN 206596415 U discloses a plant cultivation bottle, including plant culture medium, a bottle lid and illuminator, this bottle is transparent and has the growth space for the plant, the plant culture medium can provide the vegetation with the required nutrient, the bottle lid covers the bottleneck of the bottle and provides for an airtight space, the illuminator contains the circuit board that has control circuit and further comprises the LED lamp and a rechargeable battery.

US patent application US 2010/182771 A1 discloses an ornamental container including a transparent bottle, a bottle cap, and an illuminating unit. The bottle cap is formed of a hollow barrel and a cover member. The hollow barrel has a through hole running through a bottom side thereof. When the cover member is pressed, at least one part of the cover member is deformed or moved downwardly. The illuminating unit includes a power source, a circuit, a push switch, and a light source. The light generated by the light source passes through the through hole to be shone downwardly. The push switch is located below the cover member and can be forced by the downward deformation or movement of the cover member to activate or deactivate the light source.

Chinese utility model CN 206776505 U discloses an ecological bottle that comprises a bottle, cork and LED lamp device, and the bottle top is provided with the cork, and the cork centre is provided with a through hole with LED lamp device that includes an upper cover, battery, LED lamp and lower cover, the LED lamp and battery are arranged between the upper cover and lower cover.

Japanese utility model JP 3214572 U 25 discloses a hard transparent container having an opening, a lid attached to the opening of the transparent container, a light source attached to the lid and illuminating the inside of the transparent container.

In addition to containing liquid, bottles are also used to contain solid products as stock or as decoration. Such a container is preferably made of glass. Such a container can be provided for this purpose with a relatively large opening in the neck, for instance relative to a drinking or wine bottle. Such an opening then has a size such that an adult's hand can be placed therethrough. The diameter of the opening in the neck can for instance not be smaller than 70%, even 80% or 90%, of the diameter of the bottom. The cap is preferably configured to close the bottle repeatedly.

It is an object of the invention, among others, to improve the known bottle. This object, among others, is achieved by providing a bottle according to claim 10 and a releasable cap according to claim 1. The cap may be arranged on a neck of the bottle and which closes the bottle, wherein this bottle has the special feature that the cap is provided with at least one battery and light source coupled thereto for the purpose of emitting light downward into the bottle. The content of the bottle can be illuminated with the light source or lamp.

The light source is situated on the underside of the cap, such that the light can be emitted downward, i.e. in the direction of the bottom in the situation in which the cap is arranged on the bottle.

The cap provided with light source is preferably self-sufficient in the sense that the battery provides the required energy to the light source. The cap, preferably a housing arranged therein as will be further elucidated below, is preferably provided with a battery holder in which a battery can be held, wherein the battery holder is operatively connected to the light source.

According to a further preferred embodiment, the cap is provided with means for power supply, for instance a plug or a connection for a plug. The battery would then not be necessary. It is however also possible for the battery to be rechargeable, wherein the power supply is configured to charge the battery.

The cap comprises a switch or operating button for activating or deactivating the light source. With such a switch, or alternative operating means, the light source can be switched on and/or off. It is also possible to envisage the cap being provided with operating means, for instance the same or a further switch, for the purpose of adjusting other properties of the light, such as colour, intensity and/or flash frequency. The switch, or further operating means, are for this purpose operatively coupled, for instance via a suitable controller, to the light source and the battery.

In order to be able to operate the light source in simple manner, the cap comprises an operating button extending outward in upward direction relative to the cap. The switch can then be operated from the outside.

A compact and attractive cap according to the invention is obtained if the at least one lamp, and preferably other components such as the battery and for instance the controller, is arranged countersunk in the cap, on the underside thereof. The cap then has the appearance of a normal cap. The cap is provided on the underside with a recess in which the lamp and the battery are held. Such a cap can be manufactured in simple manner. The cap preferably comprises a downward extending collar which surrounds the light source and which co-acts in sealing manner with a wall of the neck of the bottle. The collar, or the cap in general, preferably has for this purpose an inclining side surface.

The cap is provided with a passage for the operating button extending from the recess to the upper side of the cap. The operating button can thus be operatively connected to the components in the recess.

The cap is formed by a cork functioning as seal. Such a cap looks attractive, while an efficient seal is provided for. The light source is arranged in the cork, on the underside thereof.

An energy-efficient embodiment is obtained when the light source comprises an LED. The cap preferably comprises a plurality of light sources, preferably a plurality of LED lamps. At least two of the light sources can then differ in respect of intensity and/or colour. It is for instance possible that, with the operating means as described above, combinations of light sources can be switched between for the purpose of obtaining different lighting configurations.

According to a further preferred embodiment, the light source is configured to emit light which stimulates plant growth. In this way plant material can be kept in the bottle or jar, wherein the light source provides for at least some of the light required for the plant material. According to a further preferred embodiment, the bottle comprises (live) plant material. The bottle can be provided with a nutrient medium in which the plant material grows.

The bottle is preferably manufactured from glass or other transparent material. The content, which can be illuminated, is then clearly visible. The cap is manufactured from cork or wood, or a combination thereof.

In order to prevent failure due to moisture coming from for instance the plant material the light source, and preferably other components in the cap, are resistant to liquid. The underside of the cap can for instance be provided with a seal which protects the components. The components themselves can also be provided in a housing.

The invention further relates to a bottle provided with a cap according to the invention.

The invention further relates to a method for manufacturing a bottle with plant material, comprising the steps of:
- providing a bottle according to the invention;
- arranging plant material in the bottle; and
- closing the bottle with plant material with the cap according to the invention.

The present invention is further illustrated on the basis of the following figures which show a preferred embodiment and are not intended to limit the scope of the invention in any way, wherein:
- Figure 1 shows a bottle;
- Figure 2 shows a perspective view of a cap;
- Figure 3 shows the cap from below;
- Figures 4a and 4b show schematically respectively the interior of the cap and a bottom view of the cap;
- Figure 5 shows a cross-section of the cap; and
- Figure 6 shows a further preferred embodiment of the bottle.

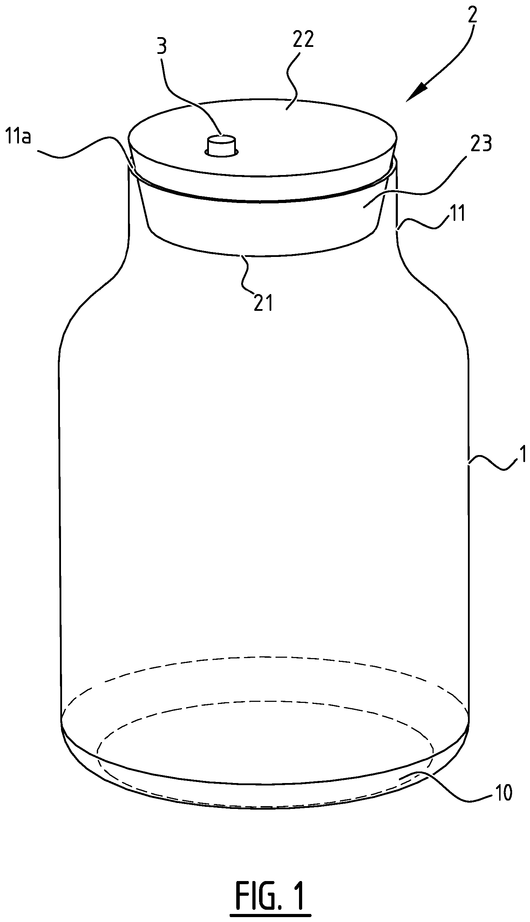

Figure 1 shows a glass bottle 1 or jar with a bottom 10 and a neck 11. Arranged in opening 11a of neck 11 is a cap or cork 2 for closing bottle 1. Cap 2 is substantially disc-like and has an upper side 22, an underside 21 and a side surface 23 running obliquely from upper side 22 to underside 21. Oblique side surface 23 co-acts with the inner wall of neck 11 for the purpose of clampingly closing bottle 1.

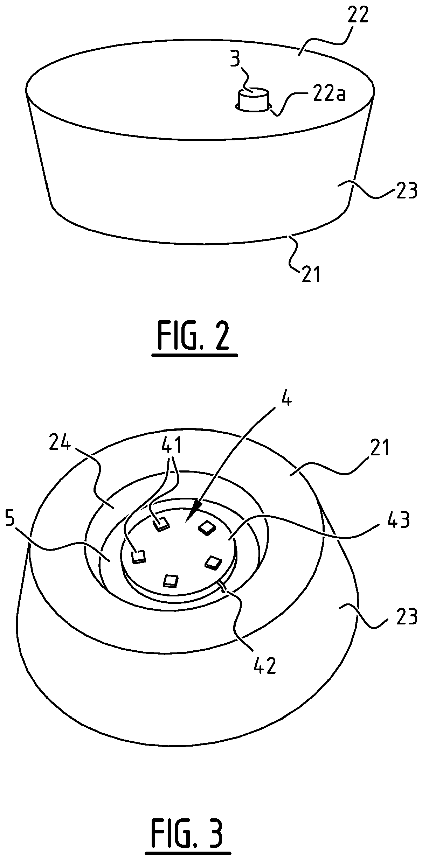

It can be seen in figures 1 and 2 that upper side 22 of cap 2 is provided with an opening 22a in which a push button 3 is arranged. Push button 3 is operatively connected to a light source 4, in this embodiment comprising a plurality of LED lamps 41. In this embodiment LEDs 41 are arranged on a carrier 43 which is connected to a housing 5 in which other components are arranged. Light source 4 is operatively coupled to other components via electric wire 42.

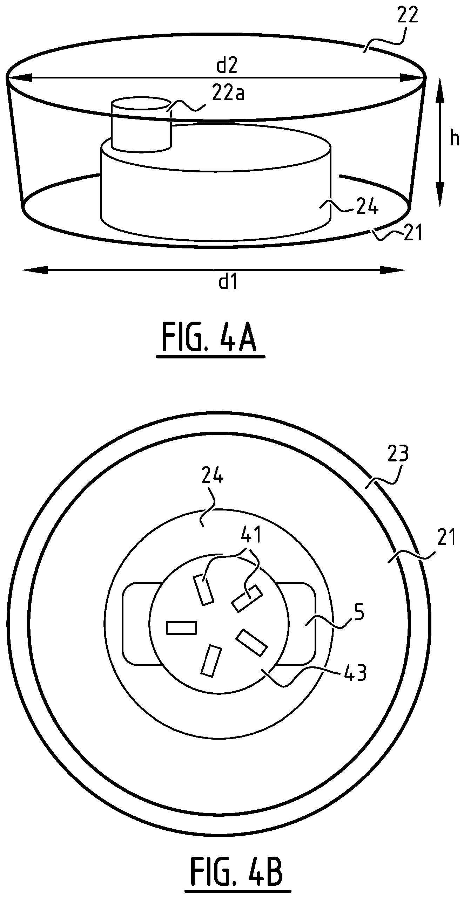

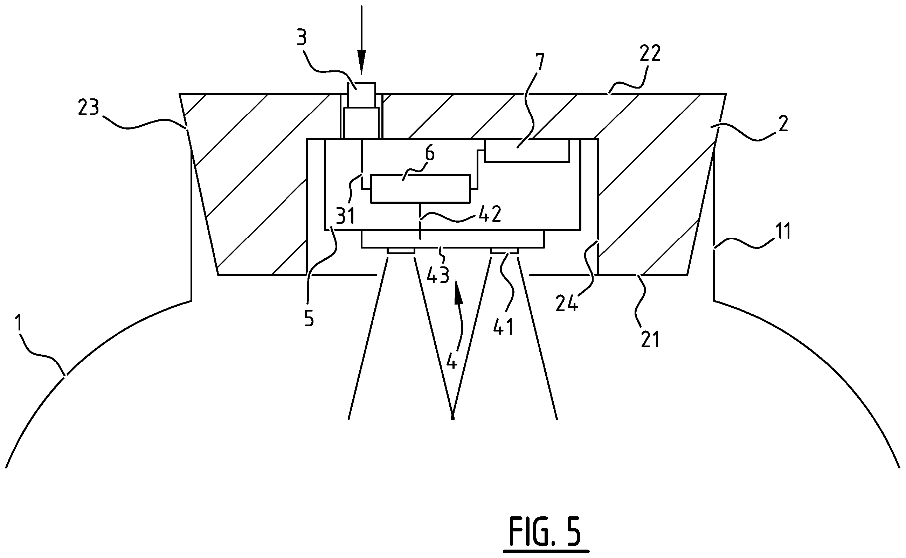

As can be seen in figure 3, but also in figures 4a and 5, a recess 24 is arranged on the underside 21 of cap 2. Light source 4 and other components can be arranged countersunk therewith in cap 2. Lamps 41, or other components, do not protrude here beyond the plane of the underside 21 of the cap. Situated on the upper side of recess 24 is the opening 22a, which debouches from recess 24 in upper side 22. The push button 3 is arranged in opening 22a.

Cap 2 moreover comprises a battery 7 (figure 5) which is held in a suitable battery holder. Battery 7 is coupled, in this embodiment via controller 6, to light source 4. Push button 3 is in this embodiment also connected via controller 6 to battery 7 and light source 4. The battery, preferably with battery holder, and optionally controller 6 are arranged in a housing 5 which is also situated in recess 24. The different components are operatively connected in known manner, shown schematically with 31 for the coupling between push button 3 and controller 6. Housing 5 is preferably manufactured from plastic and is preferably water-resistant. Light source 4 is preferably also water-resistant. The whole cap with components, particularly those on the underside thereof, is preferably water-resistant.

The upper side 22 of cap 2 can for instance have a diameter d2 of 105 mm, the diameter d1 of underside 21 can be 95 mm, while the cap can have a height h of 32 mm. The invention is not limited to these specific dimensions. It is however advantageous for the cap to have a height which is smaller than the diameters of the upper and underside of cap 1. The height is preferably smaller than half the diameter of underside 21.

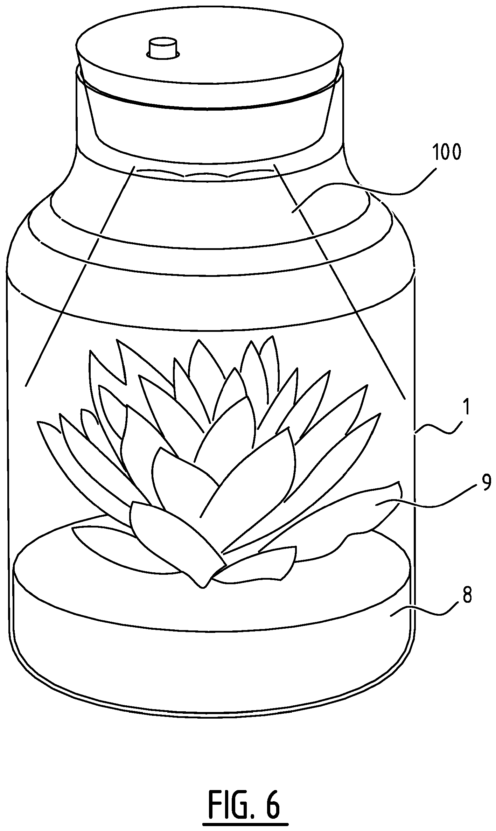

Figure 6 shows a variant in which a nutrient medium or carrier material 8 with a plant 9 therein is arranged in bottle 1. The light 100 coming from the light source is preferably suitable for the cultivation of plant 9.

The present invention is not limited to the shown embodiments, but also extends to other embodiments falling within the scope of the appended claims.

## Claims

1. Releasable cap (2) suitable for application on a neck (11) of a bottle (1) for closing the bottle, wherein the cap (2) is manufactured from cork or wood, or a combination thereof and is formed by a cork functioning as seal, wherein the cap (2) is substantially disc-like and has an upper side (22), an underside (21) and a side surface (23) running obliquely from upper side (22) to underside (21), wherein the oblique side surface (23) is arranged co-act with the inner wall of the neck (11) of the bottle (1) for the purpose of clampingly closing bottle (1), wherein the cap (2) is provided with at least one battery (7) and light source (4) coupled thereto for the purpose of emitting light (100) downward into the bottle (1), wherein the cap (2) comprises a switch for activating and deactivating the light source (4), **characterized in that** the light source (4) is arranged in the cork (2), on the underside (21) thereof, wherein the at least one lamp (41) is arranged countersunk in the cap (2), wherein the cap (2) is provided on the underside (21) with a recess (24) in which the light source (4) and the battery (7) are held, wherein the light source (4) and other components, do not protrude beyond the plane of the underside (21) of the cap (2), wherein the switch comprises a push button (3) extending outward in upward direction relative to the cap (2), and wherein the cap (2) is provided with a passage (22a) for the push button (3) extending from the recess (24) to the upper side (22) of the cap (2).

2. Releasable cap (2) according to claim 1, wherein the cap (2) comprises a downward extending collar (23) which surrounds the light source (4) and which co-acts in sealing manner with a wall of the neck (11) of the bottle (1).

3. Releasable cap (2) according to claim 1 or 2, wherein on the upper side of recess (24) the opening (22a) is located, which debouches from recess (24) in upper side (22), said opening (22a) having a smaller size than the recess (24), wherein the push button (3) is arranged in opening (22a), and wherein the push button (3) is operatively connected to the light source (4).

4. Releasable cap (2) according to any one of the foregoing claims, wherein the cap (1) has a height (h) which is smaller than the diameters (d1,d2) of the upper (22) and underside (21) of the cap.

5. Releasable cap (2) according to any one of the foregoing claims, wherein the light source (4) comprises a LED (41).

6. Releasable cap (2) according to any one of the foregoing claims, wherein the light source (4) emits light (100) which stimulates plant growth.

7. Releasable cap (2) according to any one of the foregoing claims, wherein the cap (2) comprises a plurality of light sources (4).

8. Releasable cap (2) according to at least claim 1, wherein the cap (2) further comprises a housing (5) for holding the battery (7) and optional other components, wherein the housing (5) is also situated in the recess (24), wherein the light source (4) comprises a plurality of LED lamps (41) arranged on a carrier (43) which is connected to the housing (5), and wherein the light source (4) is operatively coupled to other components via electric wire (42).

9. Releasable cap (2) according to any one of the foregoing claims, wherein the light source (4) and preferably other components are resistant to liquid.

10. Bottle (1) provided with a releasable cap (2) according to any one of the foregoing claims, wherein the cap (2) is releasably arranged on a neck (11) of the bottle (1) and which closes the bottle.

11. Bottle (1) according to claim 10, wherein the bottle (1) is manufactured from glass.

12. Bottle (1) according to claim 10 or 11, wherein the bottle (1) is provided with a relatively large opening in the neck (11), which has a size such that an adult's hand can be placed therethrough.

13. Bottle (1) according to any of the preceding claims 10 - 12, wherein the bottle (1) comprises live plant material (9).

14. Bottle (1) according to claim 13, wherein the bottle (1) is provided with a nutrient medium or carrier material (8) in which the plant material (9) grows.

15. Method for manufacturing a bottle (1) with plant material (9), comprising the steps of:
- providing a bottle (1) according to at least one of the foregoing claims 10 - 14;
- arranging plant material (9) in the bottle (1); and
- closing the bottle (1) with plant material (9) with the cap (2) according to at least one of the foregoing claims 1 - 9.

## Patentansprüche

1. Lösbarer Verschluss (2), der zum Aufbringen auf einen Hals (11) einer Flasche (1) zum Verschließen der Flasche geeignet ist, wobei der Verschluss (2) aus Kork oder Holz oder einer Kombination davon hergestellt ist und durch einen Korken, der als Dichtung funktioniert, gebildet wird, wobei der Verschluss (2) im Wesentlichen scheibenförmig ist und eine Oberseite (22), eine Unterseite (21) und eine schräg von der Oberseite (22) zur Unterseite (21) verlaufende Seitenfläche (23) aufweist, wobei die schräge Seitenfläche (23) so angeordnet ist, dass sie mit der Innenwand des Halses (11) der Flasche (1) zusammenwirkt, um die Flasche (1) klemmend zu verschließen, wobei der Verschluss (2) mit mindestens einer Batterie (7) und einer damit gekoppelten Lichtquelle (4) versehen ist, um Licht (100) nach unten in die Flasche (1) zu emittieren, wobei der Verschluss (2) einen Schalter zum Aktivieren und Deaktivieren der Lichtquelle (4) umfasst, **dadurch gekennzeichnet, dass** die Lichtquelle (4) im Korken (2) an dessen Unterseite (21) angeordnet ist, wobei die mindestens eine Lampe (41) versenkt in dem Verschluss (2) angeordnet ist, wobei der Verschluss (2) an der Unterseite (21) mit einer Aussparung (24) versehen ist, in der die Lichtquelle (4) und die Batterie (7) gehalten werden, wobei die Lichtquelle (4) und andere Komponenten nicht über die Ebene der Unterseite (21) des Verschlusses (2) hinausragen, wobei der Schalter einen Druckknopf (3) umfasst, der sich nach oben relativ zu dem Verschluss (2) nach außen erstreckt, und wobei der Verschluss (2) mit einem Durchgang (22a) für den Druckknopf (3) versehen ist, der sich von der Aussparung (24) zur Oberseite (22) des Verschlusses (2) erstreckt.

2. Lösbarer Verschluss (2) nach Anspruch 1, wobei der Verschluss (2) einen sich nach unten erstreckenden Kragen (23) aufweist, der die Lichtquelle (4) umgibt und mit einer Wand des Halses (11) der Flasche (1) abdichtend zusammenwirkt.

3. Lösbarer Verschluss (2) nach Anspruch 1 oder 2, wobei sich auf der Oberseite der Aussparung (24) die Öffnung (22a) befindet, die von der Aussparung (24) in die Oberseite (22) mündet, wobei die Öffnung (22a) eine kleinere Größe als die Aussparung (24) aufweist, wobei der Druckknopf (3) in der Öffnung (22a) angeordnet ist, und wobei der Druckknopf (3) mit der Lichtquelle (4) wirkverbunden ist.

4. Lösbarer Verschluss (2) nach einem der vorhergehenden Ansprüche, wobei der Verschluss (2) eine Höhe (h) aufweist, die kleiner ist als die Durchmesser (d1, d2) der Ober- (22) und Unterseite (21) des Verschlusses.

5. Lösbarer Verschluss (2) nach einem der vorhergehenden Ansprüche, wobei die Lichtquelle (4) eine LED (41) umfasst.

6. Lösbarer Verschluss (2) nach einem der vorhergehenden Ansprüche, wobei die Lichtquelle (4) Licht (100) emittiert, das Pflanzenwachstum stimuliert.

7. Lösbarer Verschluss (2) nach einem der vorhergehenden Ansprüche, wobei der Verschluss (2) eine Vielzahl von Lichtquellen (4) umfasst.

8. Lösbarer Verschluss (2) nach mindestens Anspruch 1, wobei der Verschluss (2) ferner eine Aufnahme (5) zum Halten der Batterie (7) und gegebenenfalls anderer Komponenten umfasst, wobei sich die Aufnahme (5) auch in der Aussparung (24) befindet, wobei die Lichtquelle (4) eine Vielzahl von LED-Lampen (41) umfasst, die auf einem Träger (43) angeordnet sind, der mit der Aufnahme (5) verbunden ist, und wobei die Lichtquelle (4) über einen elektrischen Draht (42) betriebsmäßig mit anderen Komponenten gekoppelt ist.

9. Lösbarer Verschluss (2) nach einem der vorhergehenden Ansprüche, wobei die Lichtquelle (4) und vorzugsweise andere Komponenten flüssigkeitsbeständig sind.

10. Flasche (1) mit einem lösbaren Verschluss (2) nach einem der vorhergehenden Ansprüche, wobei der Verschluss (2) lösbar an einem Hals (11) der Flasche (1) angeordnet ist und die Flasche verschließt.

11. Flasche (1) nach Anspruch 10, wobei die Flasche (1) aus Glas hergestellt ist.

12. Flasche (1) nach Anspruch 10 oder 11, wobei die Flasche (1) mit einer relativ großen Öffnung im Hals (11) versehen ist, die eine solche Größe aufweist, dass die Hand eines Erwachsenen hindurchgesteckt werden kann.

13. Flasche (1) nach einem der vorhergehenden Ansprüche 10 bis 12, wobei die Flasche (1) lebendes Pflanzenmaterial (9) umfasst.

14. Flasche (1) nach Anspruch 13, wobei die Flasche (1) mit einem Nährmedium oder Trägermaterial (8) versehen ist, in dem das Pflanzenmaterial (9) wächst.

15. Verfahren zur Herstellung einer Flasche (1) mit Pflanzenmaterial (9), wobei das Verfahren die folgenden Schritte umfasst:
- Bereitstellen einer Flasche (1) nach mindestens einem der vorhergehenden Ansprüche 10 bis 14;
- Anordnen von Pflanzenmaterial (9) in der Flasche (1); und
- Verschließen der Flasche (1) mit Pflanzenmaterial (9) mit dem Verschluss (2) nach mindestens einem der vorhergehenden Ansprüche 1 bis 9.

## Revendications

1. Couvercle amovible (2) apte à être appliqué sur le col (11) d'une bouteille (1) afin de fermer ladite bouteille, le couvercle (2) étant fabriqué en liège ou en bois ou dans une combinaison de ces matériaux, et est formé par un bouchon ayant fonction d'obturateur, ledit couvercle (2) étant sensiblement en forme de disque et présentant une face supérieure (22), une face inférieure (21) et une surface latérale (23) s'étendant à l'oblique entre la face supérieure (22) et la face inférieure (21), ladite surface latérale oblique (23) étant agencée pour interagir avec la paroi intérieure du col (11) de la bouteille (1) afin de fermer la bouteille (1) sous un effet de serrage, ledit couvercle (2) étant doté d'au moins une pile (7) et une source lumineuse (4) couplée à cette dernière afin d'émettre de la lumière (100) orientée vers le bas à l'intérieur de la bouteille (1), ledit couvercle (2) comprenant un interrupteur servant à activer et désactiver la source lumineuse (4), **caractérisé en ce que** la source lumineuse (4) est agencée dans le bouchon (2), sur la face inférieure (21) de celui-ci, l'au moins une lampe (41) est agencée encastrée dans le couvercle (2), ledit couvercle (2) étant doté, sur la face inférieure (21), d'un évidement (24) dans lequel la source lumineuse (4) et la pile (7) sont contenus, ladite source lumineuse (4) et d'autres composants ne dépassant pas du plan de la face inférieure (21) du couvercle (2), ledit interrupteur comprenant un bouton-poussoir (3) dirigé vers l'extérieur et vers le haut par rapport au couvercle (2), et ledit couvercle (2) étant doté d'un passage (22a) destiné au bouton-poussoir (3) et s'étendant depuis l'évidement (24) jusqu'à la face supérieure (22) du couvercle (2).

2. Couvercle amovible (2) selon la revendication 1, ledit couvercle (2) comprenant une collerette (23) descendante qui entoure la source lumineuse (4) et qui interagit, de façon obturatrice, avec une paroi du col (11) de la bouteille (1).

3. Couvercle amovible (2) selon la revendication 1 ou 2, dans lequel l'ouverture (22a) est située sur la face supérieure de l'évidement (24) et débouche, depuis l'évidement (24), dans la face supérieure (22), ladite ouverture (22a) étant de taille inférieure à celle de l'évidement (24), ledit bouton-poussoir (3) étant agencé dans l'ouverture (22a), et ledit bouton-poussoir (3) étant relié de manière fonctionnelle à la source lumineuse (4).

4. Couvercle amovible (2) selon l'une quelconque des revendications précédentes, ledit couvercle (2) présentant une hauteur (h) qui est inférieure au diamètre (d1, d2) de la face supérieure (22) et de la face inférieure (21) du couvercle.

5. Couvercle amovible (2) selon l'une quelconque des revendications précédentes, dans lequel la source lumineuse (4) comprend une LED (41).

6. Couvercle amovible (2) selon l'une quelconque des revendications précédentes, dans lequel la source lumineuse (4) émet de la lumière (100) qui stimule la croissance d'une plante.

7. Couvercle amovible (2) selon l'une quelconque des revendications précédentes, ledit couvercle (2) comprenant une pluralité de sources lumineuses (4).

8. Couvercle amovible (2) au moins selon la revendication 1, ledit couvercle (2) comprenant en outre un logement (5) destiné à contenir la pile (7) et d'autres composants facultatifs, ledit logement (5) étant également situé dans l'évidement (24), ladite source lumineuse (4) comprenant une pluralité de luminaires LED (41) agencés sur un support (43) relié au logement (5), et ladite source lumineuse (4) étant couplée de manière fonctionnelle à d'autres composants par le biais d'un fil électrique (42).

9. Couvercle amovible (2) selon l'une quelconque des revendications précédentes, dans lequel la source lumineuse (4) et de préférence d'autres composants sont résistants aux liquides.

10. Bouteille (1) dotée d'un couvercle amovible (2) selon l'une quelconque des revendications précédentes, dans laquelle le couvercle (2) est agencé de manière amovible sur un col (11) de la bouteille (1) et fermant la bouteille.

11. Bouteille (1) selon la revendication 10, ladite bouteille (1) étant fabriquée en verre.

12. Bouteille (1) selon la revendication 10 ou 11, ladite bouteille (1) étant dotée d'une ouverture relativement grande dans le col (11), laquelle est de taille suffisante pour permettre à la main d'un adulte d'y pénétrer.

13. Bouteille (1) selon l'une quelconque des revendications précédentes 10 à 12, ladite bouteille (1) comprenant une matière végétale (9) vivante.

14. Bouteille (1) selon la revendication 13, ladite bouteille (1) étant dotée d'un milieu nutritif ou d'un substrat (8) dans lequel pousse la matière végétale (9).

15. Procédé de production d'une bouteille (1) renfermant une matière végétale (9), comprenant les étapes consistant à:
- disposer d'une bouteille (1) selon l'une au moins des revendications précédentes 10 à 14,
- arranger une matière végétale (9) dans la bouteille (1), et
- fermer la bouteille (1) contenant la matière végétale (9) à l'aide du couvercle (2) selon l'une au moins des revendications précédentes 1 à 9.
